# EUROPÄISCHE PATENTSCHRIFT

(11) **EP 1 898 288 B1**
(45) Veröffentlichungstag und Bekanntmachung des Hinweises auf die Patenterteilung: **20.10.2010**
(21) Anmeldenummer: 07079504.2
(22) Anmeldetag: 06.08.2007
(51) Int. Cl.: G05D 1/00, G05D 1/02

(54) **Positionsbestimmungsvorrichtung für ein fahrerloses Transportfahrzeug**
Position determination device for an automated guided vehicle
Appareil de détermination de la position d'un véhicule guidé automatisé

(30) Priorität: 06.09.2006 DE 102006041799
(43) Veröffentlichungstag der Anmeldung: 12.03.2008
(73) Patentinhaber: SICK AG, 79183 Waldkirch (DE)
(72) Erfinder: Torabi, Bahram, 79100 Freiburg (DE)
(74) Vertreter: Manitz, Finsterwald & Partner GbR

(56) Entgegenhaltungen:
- WO-A-95/29380
- FR-A- 2 606 176
- US-B1- 6 246 916
- US-B1- 6 445 984
- GUTSCHE R ET AL: "MONAMOVE* - EIN NAVIGATIONS- UND UEBERWACHUNGSSYSTEM FUER FAHRERLOSE TRANSPORTFAHRZEUGE IN FABRIKATIONSUMGEBUNGEN**" ROBOTERSYSTEME, SPRINGER VERLAG. BERLIN, DE, Bd. 8, Nr. 3, Januar 1992 (1992-01), Seiten 182-190, XP000297478

## Beschreibung

Die Erfindung betrifft eine Positionsbestimmungsvorrichtung für ein fahrerloses Transportfahrzeug, durch die Positionsmesswerte ermittelbar sind, die einer aktuellen Position der Positionsbestimmungsvorrichtung bzw. des fahrerlosen Transportfahrzeugs entsprechen.

Eine derartige Positionsbestimmungsvorrichtung findet beispielsweise in Hochregallagern Anwendung. Dort bewegen sich fahrerlose Transportfahrzeuge (FTF) in den Regalgassen, um Gegenstände wie Paletten, Behälter oder dergleichen an vorbestimmter Stelle einzulagern oder auszulagern. Um ein reibungsloses Abladen und Aufladen der Gegenstände zu gewährleisten, ist es wichtig, dass das Transportfahrzeug entlang der Regalgasse präzise positioniert ist. Hierfür ermittelt die Positionsbestimmungsvorrichtung, die an dem Transportfahrzeug befestigt ist und mit diesem mitfährt, einen aktuellen Positionsmesswert, beispielsweise den Abstand des Transportfahrzeugs zu einem Target. Ein solches Target, beispielsweise ein Retroreflektor, ist an einem Ende der Regalgasse angeordnet. Der Positionsmesswert wird beispielsweise nach dem Lichtlaufzeitprinzip ermittelt, z.B. durch zeitabhängige Ladungsintegration, oder durch Bestimmung der Phasenlage eines modulierten Lichtsignals.

Ein solcher Positionsmesswert kann von einer Antriebssteuereinrichtung des fahrerlosen Transportfahrzeugs in einer entsprechenden Regelungsschleife berücksichtigt werden. Problematisch hierbei ist, dass auch unbeabsichtigte Fahrzeugbewegungen - beispielsweise ein Schwanken des Fahrzeugs beim Abladen oder Aufladen von Gegenständen - in aufeinander folgenden Messungen zu unterschiedlichen Positionsmesswerten führen können, obwohl das Fahrzeug an sich keine Fahrtbewegung durchführt. Diese unterschiedlichen Positionsmesswerte sollen in der Antriebssteuereinrichtung jedoch noch nicht zu aktiven Korrekturbewegungen des Fahrzeugs führen, da hierdurch das stabile Einhalten der vorbestimmten Fahrzeugposition nicht mehr gewährleistet wäre.

Es kann deshalb vorgesehen sein, dass die Positionsbestimmungsvorrichtung bzw. eine zugeordnete Auswerte- und Steuereinrichtung zwischen einer Stillstandsphase und einer Bewegungsphase der Positionsbestimmungsvorrichtung bzw. des fahrerlosen Transportfahrzeugs unterscheidet, wobei in der Stillstandsphase gewisse Abweichungen von nacheinander ermittelten Positionsmesswerten toleriert werden. Erst wenn bei aufeinander folgenden Messungen Positionsmesswerte ermittelt werden, die sich hinreichend deutlich voneinander unterscheiden, wird davon ausgegangen, dass die Positionsbestimmungsvorrichtung bzw. das Transportfahrzeug sich in der Bewegungsphase befindet. Nur in dieser Bewegungsphase werden gegenüber den in der Stillstandsphase ausgegebenen Positionsausgabesignalen geänderte Positionsausgabesignale an die Antriebssteuereinrichtung des Transportfahrzeugs ausgegeben.

Eine derartige Vorgehensweise hat jedoch auch zur Folge, dass eine tatsächliche Fahrtbewegung erst vergleichsweise spät als solche erkannt wird. Dieser Effekt kann bei einem Übergang zwischen der Stillstandsphase und der Bewegungsphase zu einer Übersteuerung in der betreffenden Regelungsschleife der Antriebssteuerung führen, die sich in den Start- und Stopp-Phasen der Fahrzeugbewegung als unerwünschtes "Ruckeln" bemerkbar macht. Auch durch die Anwendung von Vergleichs- und Annäherungsalgorithmen im Übergang zwischen der Stillstandsphase und der Bewegungsphase kann dieser Effekt nicht hinreichend beseitigt werden.

W09529380 beschreibt eine Positionsbestimmungsvorrichtung eines autonomen, fahrerlosen Transportsystems. Die Positionsmesswerte werden aus entsprechenden Abständen zu Retroreflektoren nach dem Lichtlaufzeitprinzip bestimmt. Die Positionswerte werden so lange gemittelt bis die Genauigkeit ausreichend ist.

FR2606176 beschreibt auch eine Positionsmessung eines fahrerlosen Transportfahrzeug. Die Frequenz der Positionsmessungen ist abhängig von der Fahrzeuggeschwindigkeit. Nach jeder Positionsmessung wird der gleitende Mittelwert der Messwerte bestimmt.

Es ist eine Aufgabe der Erfindung, die von der Positionsbestimmungsvorrichtung ausgegebenen Positionsausgabesignale für die Antriebssteuerung des fahrerlosen Transportfahrzeugs dahingehend zu verbessern, dass auch in den Start- und Stopp-Phasen der Fahrzeugbewegung eine präzise Steuerung des Transportfahrzeugs möglich ist und hierbei sprunghafte Änderungen des Motorstroms des Transportfahrzeugs vermieden werden.

Diese Aufgabe wird durch eine Positionsbestimmungsvorrichtung mit den Merkmalen des Anspruchs 1 gelöst, und insbesondere dadurch, dass die Positionsbestimmungsvorrichtung einen Bewegungssensor aufweist, durch den zusätzlich zu der Ermittlung der Positionsmesswerte eine Bewegung der Positionsbestimmungsvorrichtung detektierbar ist und entsprechende Bewegungsmesswerte ermittelbar sind, wobei die Positionsbestimmungsvorrichtung eine Auswerte- und Steuereinrichtung aufweist, durch die die Positionsmesswerte und die Bewegungsmesswerte auswertbar sind, um entsprechende Positionsausgabesignale für eine Antriebssteuerung des fahrerlosen Transportfahrzeugs auszugeben, und wobei die Auswerte- und Steuereinrichtung dergestalt zur Auswertung der Positionsmesswerte und der Bewegungsmesswerte ausgebildet ist, dass aufgrund der ermittelten Bewegungsmesswerte zumindest zwischen einer Langsambewegungsphase und einer Schnellbewegungsphase des die Positionsbestimmungsvorrichtung tragenden fahrerlosen Transportfahrzeugs unterschieden wird und die Positionsmesswerte für die verschiedenen Bewegungsphasen mit einer unterschiedlichen Integrationstiefe ausgewertet werden.

Somit ist ein Bewegungssensor vorgesehen, der unabhängig von der Ermittlung eines Positionsmesswerts (z.B. des absoluten Abstands zu einem Target) eine Bewegung der Positionsbestimmungsvorrichtung bzw. des zugeordneten Transportfahrzeugs erfasst, also eine Geschwindigkeit oder eine Beschleunigung. Indem zusätzlich ein unabhängiger Bewegungsmesswert zur Verfügung steht, kann die Positionsbestimmungsvorrichtung besonders zuverlässig und schnell zwischen einer Langsambewegungsphase und einer Schnellbewegungsphase des fahrerlosen Transportfahrzeugs unterscheiden, um bei Feststellung einer Schnellbewegungsphase die Positionsmesswerte vorzugsweise mit einer geringeren Integrationstiefe auszuwerten als bei Feststellung einer Langsambewegungsphase.

Unter einer Auswertung der Positionsmesswerte mit einer bestimmten Integrationstiefe ist im Zusammenhang mit der Erfindung beispielsweise eine Mittelung der ermittelten Positionsmesswerte zu verstehen (gleitende Mittelwertbildung), wobei eine unterschiedliche Integrationstiefe insbesondere dadurch realisiert werden kann, dass über eine unterschiedliche Anzahl von zuletzt ermittelten Positionsmesswerten gemittelt wird.

Eine erhöhte derartige Integrationstiefe bei Feststellung einer Langsambewegungsphase (z.B. bei Schleichfahrt oder Fahrzeugstillstand) bewirkt zum einen, dass die bereits erwähnten unbeabsichtigten Fahrzeugbewegungen - beispielsweise ein Schwanken des Fahrzeugmasts - zuverlässig ausgemittelt werden können, um keine unerwünschten Ausgleichsbewegungen durch die Antriebssteuerung des Transportfahrzeugs auszulösen. Zum anderen kann durch die erhöhte Integrationstiefe das unvermeidbare Signalrauschen des Systems besser unterdrückt werden (erhöhtes Signal/Rausch-Verhältnis). Die im Vergleich hierzu geringere Integrationstiefe bei Feststellung einer Schnellbewegungsphase (z.B. bei erwünschter schneller Transportfahrt) gewährleistet, dass bei schneller Bewegung des Fahrzeugs und insbesondere bei starker Beschleunigung oder Verzögerung Schleppfehler vermieden werden, die zu dem bereits erläuterten unerwünschten "Ruckeln" des Fahrzeugsantriebs führen könnten. Durch Verwendung eines zusätzlichen Bewegungssensors kann sehr schnell und zuverlässig zwischen der Langsambewegungsphase und der Schnellbewegungsphase unterschieden werden, um die Integrationstiefe für die Auswertung der Positionsmesswerte entsprechend einzustellen.

Anzumerken ist noch, dass die genannte Langsambewegungsphase auch einen reinen Fahrzeugstillstand beinhalten kann. Die verringerte Integrationstiefe bei Feststellung einer Schnellbewegungsphase kann auch durch eine Integrationstiefe Null realisiert sein, also eine direkte Ausgabe der ermittelten Positionsmesswerte ohne Mittelung derselben.

Die erläuterte Unterscheidung zwischen der Langsambewegungsphase und der Schnellbewegungsphase des Transportfahrzeugs wird vorzugsweise anhand eines Schwellwertvergleichs getroffen, d.h. die Auswerte- und Steuereinrichtung überprüft, ob die ermittelten Bewegungsmesswerte (aktuelle Geschwindigkeit oder Beschleunigung) einen vorbestimmten Schwellwert überschreiten oder unterschreiten. Hierfür kann die Auswerte- und Steuereinrichtung einen Komparator besitzen. Beispielsweise kann die Auswerte- und Steuereinrichtung so lange, wie ein jeweils ermittelter Beschleunigungsmesswert einen vorbestimmten Schwellwert unterschreitet, davon ausgehen, dass das fahrerlose Transportfahrzeug sich in einer Langsambewegungsphase befindet (erhöhte Integrationstiefe), wobei anderenfalls das Vorliegen einer Schnellbewegungsphase festgestellt wird (verringerte Integrationstiefe).

Wie bereits erwähnt, gibt die Auswerte- und Steuereinrichtung letztlich Positionsausgabesignale an die Antriebssteuerung des fahrerlosen Transportfahrzeugs aus. Diese Positionsausgabesignale können anhand der ermittelten Positionsmesswerte, insbesondere anhand der gemäß der variablen Integrationstiefe gemittelten Positionsmesswerte erzeugt werden, oder die Positionsausgabesignale werden anhand der ermittelten Bewegungsmesswerte, insbesondere anhand von einfach integrierten Bewegungsmesswerten (Geschwindigkeitswerten) oder doppelt integrierten Bewegungsmesswerten (Beschleunigungswerten) erzeugt, oder die Positionsausgabesignale werden aufgrund einer Kombination der Positionsmesswerte und der Bewegungsmesswerte generiert.

Besonders vorteilhaft ist es, wenn die Auswerte- und Steuereinrichtung die Positionsausgabesignale anhand einer vorbestimmten Modellierung der Bewegung des fahrerlosen Transportfahrzeugs ermittelt, wobei diese Modellierung zumindest die ermittelten Positionsmesswerte, die ermittelten Bewegungsmesswerte und die Masse des fahrerlosen Transportfahrzeugs berücksichtigt. Auch zeitliche Änderungen der Positionsmesswerte und/oder der Bewegungsmesswerte können hierbei berücksichtigt werden. Eine derartige Modellierung entspricht letztlich einer Gewichtung des Positionsmesswerts und des Bewegungsmesswerts relativ zueinander, und sie kann als Nachschlagetabelle (lookup table) in einem nichtflüchtigen Speicher der Auswerte- und Steuereinrichtung abgelegt sein.

Der Bewegungssensor kann - wie bereits erwähnt - als ein Beschleunigungssensor oder ein Geschwindigkeitssensor ausgebildet sein. In beiden Fällen besteht beispielsweise gegenüber einem an der Fahrzeugachse angebrachten Inkrementalgeber der Vorteil in einer höheren Zuverlässigkeit des ermittelten Bewegungsmesswerts, da der Messwert nicht durch Schlupf der Fahrzeugräder verfälscht werden kann.

Ein besonders kostengünstiger Bewegungssensor kann durch einen handelsüblichen kapazitiven Beschleunigungssensor verwirklicht werden. Auch induktive oder piezoelektrische Beschleunigungssensoren sind möglich.

Als Geschwindigkeitssensor kommt beispielsweise eine auf den Bodenbereich unterhalb des Transportfahrzeugs gerichtete Kamera mit einer zugeordneten Bildverarbeitungseinrichtung in Betracht, die nach dem Prinzip einer optischen Computermaus zeitliche Positionsänderungen zwischen aufeinander folgenden Kameraaufnahmen erfasst und in entsprechende Geschwindigkeits- oder Beschleunigungsmesswerte umrechnet.

Die Ermittlung des Bewegungsmesswerts erfolgt vorzugsweise bezüglich einer horizontalen Bewegungsrichtung und/oder bezüglich der Fahrtrichtung des zugeordneten fahrerlosen Transportfahrzeugs. Der Bewegungssensor kann auch als ein mehrdimensionaler Bewegungssensor ausgebildet sein, durch den eine innerhalb einer Horizontalebene erfolgende Bewegung der Positionsbestimmungsvorrichtung bezüglich zwei zueinander orthogonaler Richtungen detektierbar ist. Auch dreidimensionale Bewegungssensoren sind möglich.

Die Erfindung bezieht sich auch auf ein entsprechendes Verfahren zur Erzeugung eines Positionsausgabesignals für eine Antriebssteuerung eines fahrerlosen Transportfahrzeugs, wobei Positionsmesswerte ermittelt werden, die einer aktuellen Position des fahrerlosen Transportfahrzeugs entsprechen, wobei zusätzlich zu der Ermittlung der Positionsmesswerte Bewegungsmesswerte ermittelt werden, die einer Bewegung des fahrerlosen Transportfahrzeugs (Geschwindigkeit oder Beschleunigung) entsprechen, und wobei die Positionsausgabesignale anhand der Positionsmesswerte und der Bewegungsmesswerte erzeugt werden, wobei aufgrund der ermittelten Bewegungsmesswerte zumindest zwischen einer Langsambewegungsphase und einer Schnellbewegungsphase des fahrerlosen Transportfahrzeugs unterschieden wird, und wobei die Positionsmesswerte je nach festgestellter Bewegungsphase mit einer unterschiedlichen Integrationstiefe ausgewertet werden.

Weitere Ausführungsformen sind in den Unteransprüchen genannt.

Die Erfindung wird nachfolgend lediglich beispielhaft unter Bezugnahme auf die Zeichnung erläutert.

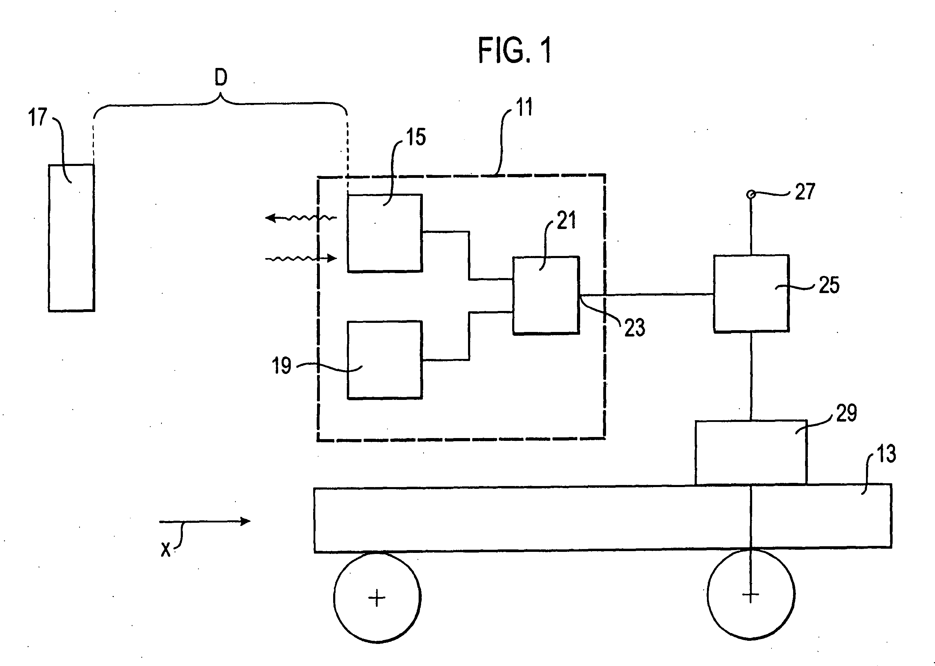

- Fig. 1: zeigt ein Blockschaltbild einer erfindungsgemäßen Positionsbestimmungsvorrichtung mit einem fahrerlosen Transportfahrzeug.

Fig. 1 zeigt eine Positionsbestimmungsvorrichtung 11, die im vorliegenden Ausführungsbeispiel als eine optoelektronische Distanzmessvorrichtung ausgebildet und an einem fahrerlosen Transportfahrzeug 13 befestigt ist, das beispielsweise zum Einlagern und Auslagern von Gegenständen in einem Hochregallager dient. Die Positionsbestimmungsvorrichtung 11 besitzt einen Positionsabsolutgeber 15, der nach dem Lichtlaufzeitprinzip den Abstand D zu einem Reflektor 17 bestimmt und entsprechende Positionsmesswerte (Abstandsmesswerte) erzeugt. Der Reflektor 17 ist an einer bekannten Position fest montiert, beispielsweise an einem Ende einer Regalgasse. Durch Ermittlung des Abstands D ist somit die absolute Position der Positionsbestimmungsvorrichtung 11 und dementsprechend des Transportfahrzeugs 13 entlang der Regalgasse bekannt. Für die Ermittlung des Abstands D wird von dem Positionsabsolutgeber 15 zum Beispiel auf an sich bekannte Weise ein Sendelichtpuls ausgesendet, der nach Reflexion am Reflektor 17 wieder empfangen und hinsichtlich der Laufzeit entlang der Messstrecke zwischen dem Positionsabsolutgeber 15 und dem Reflektor 17 ausgewertet wird.

Die Positionsbestimmungsvorrichtung 11 besitzt ferner einen dynamischen Beschleunigungssensor 19, der in die Positionsbestimmungsvorrichtung 11 integriert ist. Dieser detektiert eventuelle positive oder negative Beschleunigungen des Transportfahrzeugs 13 zumindest entlang und entgegen der Fahrtrichtung x des Transportfahrzeugs 13, und der Beschleunigungssensor 19 erzeugt entsprechende Beschleunigungsmesswerte.

Die Positionsmesswerte des Positionsabsolutgebers 15 und die Beschleunigungsmesswerte des Beschleunigungssensors 19 werden einer gemeinsamen Auswerte- und Steuereinrichtung 21 der Positionsbestimmungsvorrichtung 11 zugeführt. Diese bewertet die ermittelten Beschleunigungsmesswerte hinsichtlich des Vorliegens einer Langsambewegungsphase oder einer Schnellbewegungsphase. In Abhängigkeit von der festgestellten Bewegungsphase wertet die Auswerte- und Steuereinrichtung 21 die ermittelten Positionsmesswerte mit einer variablen Integrationstiefe aus und erzeugt an einem Signalausgang 23 ein entsprechendes Positionsausgabesignal, das einer absoluten Position des Transportfahrzeugs 13 oder einem Abstand relativ zu dem Reflektor 17 entspricht.

Dieses Positionsausgabesignal wird einer Antriebssteuereinrichtung 25 des Transportfahrzeugs 13 zugeführt, die das Positionsausgabesignal als einen Positions-Ist-Wert verwertet. Über einen Signaleingang 27 erhält die Antriebssteuereinrichtung 25 einen Positions-Soll-Wert. Der Signaleingang 27 kann beispielsweise mit einer Speichereinrichtung verbunden sein (nicht gezeigt), in der letztlich eine vorbestimmte Fahrtroute für das Transportfahrzeug 13 abgespeichert ist, oder der Positions-Soll-Wert wird beispielsweise über Funk von einer Steuerzentrale übermittelt. Die Antriebssteuereinrichtung 25 steuert einen Elektromotor 29 an, der das Transportfahrzeug 13 in und entgegen der Fahrtrichtung x antreibt. Hierfür sind in der Antriebssteuereinrichtung 25 mehrere Regelungsschleifen vorgesehen, nämlich eine Stromregelungsschleife zum Einstellen des Drehmoments des Elektromotors 29, eine Drehzahlregelungsschleife zum Einstellen der Drehgeschwindigkeit der Motorwelle bzw. der Fahrzeugachse, und eine Positionsregelungsschleife. Diese Positionsregelung erfolgt in der Antriebssteuereinrichtung 25 aufgrund eines Vergleichs des von der Auswerte- und Steuereinrichtung 21 erhaltenen Positions-Ist-Werts mit dem über den Signaleingang 27 erhaltenen Positions-Soll-Wert.

Eine Besonderheit der gezeigten Positionsbestimmungsvorrichtung 11 besteht darin, dass für die Erzeugung des Positionsausgabesignals am Signalausgang 23 der Auswerte- und Steuereinrichtung 21 nicht allein ein Positionsmesswert des Positionsabsolutgebers 15, sondern zusätzlich auch ein Bewegungsmesswert eines unabhängigen Bewegungssensors berücksichtigt wird, nämlich der genannte Beschleunigungsmesswert des Beschleunigungssensors 19. Hierdurch können die Positionsmesswerte und die Beschleunigungsmesswerte in der Auswerte- und Steuereinrichtung 21 beispielsweise gemäß einer vorbestimmten Modellierung der Bewegung des Transportfahrzeugs 13 kombiniert bzw. ausgewertet werden, um hieraus am Signalausgang 23 das genannte Positionsausgabesignal zu erzeugen. Das Positionsausgabesignal entspricht nicht unbedingt stets genau dem ermittelten Positionsmesswert (Abstand D), sondern kann gemäß den ermittelten Beschleunigungsmesswerten bezüglich des gemessenen Abstands D korrigiert sein. Hierdurch können die folgenden Anforderungen an das von der Positionsbestimmungsvorrichtung 11 ausgegebene Positionsausgabesignal in befriedigender Weise erfüllt werden:
Erstens entspricht das von der Positionsbestimmungsvorrichtung 11 am Signalausgang 23 ausgegebene Positionsausgabesignal hinreichend präzise der tatsächlichen Position des Transportfahrzeugs 13 bzw. dem Abstand D zu dem Reflektor 17, so dass diese Information in der genannten Positionsregelungsschleife der Antriebssteuereinrichtung 25 berücksichtigt werden kann.

Zweitens kann die Positionsbestimmungsvorrichtung 11 aufgrund des zusätzlichen Beschleunigungsmesswerts des unabhängigen Beschleunigungssensors 19 einen Stillstand oder eine Schleichfahrt des Transportfahrzeugs 13 einerseits und eine starke Beschleunigung oder Verzögerung mit hoher Zuverlässigkeit und sehr schnell voneinander unterscheiden, um den Fahrtzustand des Transportfahrzeugs 13 einer Langsambewegungsphase oder einer Schnellbewegungsphase zuzuordnen. Solange eine Langsambewegungsphase identifiziert ist, wertet die Auswerte- und Steuereinrichtung 21 die ermittelten Positionsmesswerte mit einer höheren Integrationstiefe aus als für eine festgestellte Schnellbewegungsphase. Hierdurch werden während einer festgestellten Langsambewegungsphase das Signalrauschen und unbeabsichtigte geringfügige Änderungen der Positionsmesswerte - beispielsweise aufgrund von Schwingungen oder eines Schwankens des Transportfahrzeugs 13 während eines Ablade- oder Aufladevorgangs - im Wesentlichen ausgemittelt oder zumindest gedämpft, und derartige Änderungen der Positionsmesswerte wirken sich nicht nachteilig auf die ausgegebenen Positionsausgabesignale aus. Bei festgestellter Langsambewegungsphase wird also vermieden, dass die Antriebssteuereinrichtung 25 des Transportfahrzeugs 13 den Elektromotor 29 zu aktiven Korrekturbewegungen veranlasst, die zu einem instabilen Regelungsverhalten führen und insbesondere einen Ablade- bzw. Aufladevorgang stören könnten. Gleichwohl ist die Integrationstiefe ausreichend gering gewählt, um beispielsweise für eine erwünschte Langsamfahrt (Schleichfahrt) ein hinreichend genaues Positionsausgabesignal für die Antriebssteuerung zu erzeugen, d.h. der durch die Mittelung der Positionsmesswerte erzeugte Schleppfehler entspricht einem noch tolerierbar geringen Wegfehler. Bei festgestellter Schnellbewegungsphase hingegen wird durch Verringerung der Integrationstiefe der Schleppfehler gezielt vermindert.

Drittens kann die Auswerte- und Steuereinrichtung 21 der Positionsbestimmungsvorrichtung 11 aufgrund der Beschleunigungsmesswerte sehr schnell und zuverlässig einen Übergang zwischen der erläuterten Langsambewegungsphase und einer Schnellbewegungsphase des Transportfahrzeugs 13 erkennen und hierauf reagieren. Sobald also beispielsweise während eines Anfahrens des Transportfahrzeugs 13 die Auswerte- und Steuereinrichtung 21 aufgrund entsprechend geänderter Positionsmesswerte des Positionsabsolutgebers 15 und entsprechender Beschleunigungsmesswerte des Beschleunigungssensors 19 feststellt, dass das Transportfahrzeug 13 sich nun in der Schnellbewegungsphase befindet, kann die Auswerte- und Steuereinrichtung 21 die am Signalausgang 23 ausgegebenen Positionsausgabesignale rasch an den aktuell gemessenen Abstand D bzw. die gemessene Absolutposition anpassen (Verringerung der Integrationstiefe). Hierdurch wird die erläuterte Positionsregelungsschleife der Antriebssteuereinrichtung 25 des Transportfahrzeugs 13 unterstützt. Da die Verringerung der Integrationstiefe bei Feststellung einer Schnellbewegungsphase eine Verringerung des Schleppfehlers bedeutet, wird ein unerwünschtes "Ruckeln" der Fahrzeugbewegung aufgrund von Übersteuerungen im Übergang zwischen den verschiedenen Bewegungsphasen vermieden. Somit werden auch während eines Übergangs zwischen der Langsambewegungsphase und der Schnellbewegungsphase des Transportfahrzeugs 13 gleichmäßige Beschleunigungs- und Verzögerungsabläufe erzielt.

Zu dem gezeigten Ausführungsbeispiel ist noch anzumerken, dass anstelle des Beschleunigungssensors 19 auch ein Geschwindigkeitssensor eingesetzt werden kann, dessen Geschwindigkeitsmesswerte in entsprechender Weise von der Auswerte- und Steuereinrichtung 21 bearbeitet werden. Außerdem muss der jeweilige Bewegungssensor 19 nicht unbedingt in die Positionsbestimmungsvorrichtung 11 integriert sein, sondern kann auch als separate Einheit angekoppelt sein.

### Bezugszeichenliste

- 11: Positionsbestimmungsvorrichtung
- 13: fahrerloses Transportfahrzeug
- 15: Positionsabsolutgeber
- 17: Reflektor
- 19: Beschleunigungssensor
- 21: Auswerte- und Steuereinrichtung
- 23: Signalausgang
- 25: Antriebssteuereinrichtung
- 27: Signaleingang
- 29: Elektromotor

- D: Abstand
- x: Fahrtrichtung

## Patentansprüche

1. Positionsbestimmungsvorrichtung (11) für ein fahrerloses Transportfahrzeug (13), durch die Positionsmesswerte ermittelbar sind, die einer aktuellen Position der Positionsbestimmungsvorrichtung entsprechen,
**dadurch gekennzeichnet,**
**dass** die Positionsbestimmungsvorrichtung einen Bewegungssensor (19) aufweist, durch den zusätzlich zu der Ermittlung der Positionsmesswerte eine Bewegung der Positionsbestimmungsvorrichtung detektierbar ist und entsprechende Bewegungsmesswerte ermittelbar sind,
wobei die Positionsbestimmungsvorrichtung (11) eine Auswerte- und Steuereinrichtung (21) aufweist, durch die die Positionsmesswerte und die Bewegungsmesswerte auswertbar sind, um entsprechende Positionsausgabesignale für eine Antriebssteuerung (25) des fahrerlosen Transportfahrzeugs (13) auszugeben, und
wobei die Auswerte- und Steuereinrichtung (21) dergestalt zur Auswertung der Positionsmesswerte und der Bewegungsmesswerte ausgebildet ist, dass aufgrund der ermittelten Bewegungsmesswerte zumindest zwischen einer Langsambewegungsphase und einer Schnellbewegungsphase des die Positionsbestimmungsvorrichtung tragenden fahrerlosen Transportfahrzeugs (13) unterschieden wird und die Positionsmesswerte für die verschiedenen Bewegungsphasen mit einer unterschiedlichen Integrationstiefe ausgewertet werden.

2. Positionsbestimmungsvorrichtung nach Anspruch 1,
**dadurch gekennzeichnet,**
**dass** die Auswerte- und Steuereinrichtung (21) dergestalt zur Auswertung der Positionsmesswerte und der Bewegungsmesswerte ausgebildet ist, dass die Positionsmesswerte für die Langsambewegungsphase des Transportfahrzeugs (13) mit einer höheren Integrationstiefe ausgewertet werden als für die Schnellbewegungsphase, wobei für die Schnellbewegungsphase auch eine Integrationstiefe Null vorgesehen sein kann.

3. Positionsbestimmungsvorrichtung nach einem der vorhergehenden Ansprüche,
**dadurch gekennzeichnet,**
**dass** für die Auswertung der Positionsmesswerte mit einer unterschiedlichen Integrationstiefe mittels der Auswerte- und Steuereinrichtung (21) eine jeweilige Mittelung über eine unterschiedliche Anzahl von ermittelten Positionsmesswerten durchführbar ist.

4. Positionsbestimmungsvorrichtung nach einem der vorhergehenden Ansprüche,
**dadurch gekennzeichnet,**
**dass** mittels der Auswerte- und Steuereinrichtung (21) überprüfbar ist, ob die ermittelten Bewegungsmesswerte einen vorbestimmten Schwellwert überschreiten oder unterschreiten, wobei aufgrund des Ergebnisses dieser Überprüfung zwischen der Langsambewegungsphase und der Schnellbewegungsphase des Transportfahrzeugs (13) unterschieden wird.

5. Positionsbestimmungsvorrichtung nach einem der vorhergehenden Ansprüche,
**dadurch gekennzeichnet,**
**dass** die Positionsausgabesignale mittels der Auswerte- und Steuereinrichtung (21)
- anhand der Positionsmesswerte, insbesondere anhand von gemittelten Positionsmesswerten, oder
- anhand der Bewegungsmesswerte, insbesondere anhand von einfach oder doppelt integrierten Bewegungsmesswerten, oder
- anhand einer Kombination der Positionsmesswerte und der Bewegungsmesswerte
erzeugbar sind.

6. Positionsbestimmungsvorrichtung nach einem der vorhergehenden Ansprüche,
**dadurch gekennzeichnet,**
**dass** die Positionsausgabesignale mittels der Auswerte- und Steuereinrichtung (21) anhand einer vorbestimmten Modellierung der Bewegung des fahrerlosen Transportfahrzeugs (13) ermittelbar sind, die zumindest die ermittelten Positionsmesswerte, die ermittelten Bewegungsmesswerte und die Masse des fahrerlosen Transportfahrzeugs berücksichtigt.

7. Positionsbestimmungsvorrichtung nach einem der vorhergehenden Ansprüche,
**dadurch gekennzeichnet,**
**dass** der Bewegungssensor (19) als ein Beschleunigungssensor, als ein Geschwindigkeitssensor oder als eine nach unten gerichtete Kamera mit einer zugeordneten Bildverarbeitungseinrichtung ausgebildet ist.

8. Positionsbestimmungsvorrichtung nach einem der vorhergehenden Ansprüche,
**dadurch gekennzeichnet,**
**dass** der Bewegungssensor (19) als ein mehrdimensionaler Bewegungssensor ausgebildet ist, durch den zumindest eine innerhalb einer Horizontalebene erfolgende Bewegung der Positionsbestimmungsvorrichtung detektierbar ist.

9. Positionsbestimmungsvorrichtung nach einem der vorhergehenden Ansprüche,
**dadurch gekennzeichnet,**
**dass** der Bewegungssensor (19) in die Positionsbestimmungsvorrichtung (11) integriert ist.

10. Positionsbestimmungsvorrichtung nach einem der vorhergehenden Ansprüche,
**dadurch gekennzeichnet,**
**dass** die Positionsbestimmungsvorrichtung (11) als eine optoelektronische Distanzmessvorrichtung ausgebildet ist, durch die durch Aussenden und Empfangen von Lichtsignalen ein Abstand (D) zu einem Target (17) ermittelbar ist, wobei der Positionsmesswert dem ermittelten Abstand (D) entspricht.

11. Verfahren zur Erzeugung von Positionsausgabesignalen für eine Antriebssteuerung (25) eines fahrerlosen Transportfahrzeugs (13), wobei Positionsmesswerte ermittelt werden, die einer aktuellen Position des fahrerlosen Transportfahrzeugs (13) entsprechen,
**dadurch gekennzeichnet,**
**dass** zusätzlich zu der Ermittlung der Positionsmesswerte Bewegungsmesswerte ermittelt werden, die einer Bewegung des fahrerlosen Transportfahrzeugs (13) entsprechen,
wobei die Positionsausgabesignale anhand der Positionsmesswerte und der Bewegungsmesswerte erzeugt werden,
wobei aufgrund der ermittelten Bewegungsmesswerte zumindest zwischen einer Langsambewegungsphase und einer Schnellbewegungsphase des fahrerlosen Transportfahrzeugs (13) unterschieden wird, und
wobei die Positionsmesswerte je nach festgestellter Bewegungsphase mit einer unterschiedlichen Integrationstiefe ausgewertet werden.

12. Verfahren nach Anspruch 11,
**dadurch gekennzeichnet,**
**dass** die Positionsmesswerte für die Langsambewegungsphase des Transportfahrzeugs (13) mit einer höheren Integrationstiefe ausgewertet werden als für die Schnellbewegungsphase, wobei für die Schnellbewegungsphase auch eine Integrationstiefe Null vorgesehen sein kann.

13. Verfahren nach einem der Ansprüche 11 oder 12,
**dadurch gekennzeichnet,**
**dass** für die Auswertung der Positionsmesswerte mit einer unterschiedlichen Integrationstiefe eine jeweilige Mittelung über eine unterschiedliche Anzahl von ermittelten Positionsmesswerten erfolgt.

## Claims

1. A position determination apparatus (11) for a driverless transport vehicle (13) by which measured position values can be determined which correspond to a then current position of the position determination apparatus,
**characterised in that**
the position determination apparatus has a motion sensor (19) by which a movement of the position determination apparatus can be detected and corresponding measured movement values can be determined in addition to the determination of the measured position values,
wherein the position determination apparatus (11) has an evaluation and control device (21) by which the measured position values and the measured movement values can be evaluated to output corresponding position output signals for a drive controller (25) of the driverless transport vehicle (13), and
wherein the evaluation and control device (21) is made for the evaluation of the measured position values and of the measured movement values such that a distinction is made between at least a slow movement phase and a fast movement phase of the driverless transport vehicle (13) carrying the position determination apparatus on the basis of the determined measured movement values and the measured position values for the different movement phases are evaluated with a different integration depth.

2. A position determination apparatus in accordance with claim 1, **characterised in that** the evaluation and control device (21) is made for the evaluation of the measured position values and of the measured movement values such that the measured position values are evaluated for the slow movement phase of the transport vehicle (13) with a higher integration depth than for the fast movement phase, with an integration depth of zero also being able to be provided for the fast movement phase.

3. A position determination apparatus in accordance with one of the preceding claims, **characterised in that** a respective communication on a different number of determined measured position values can be carried out for the evaluation of the measured position values with a different integration depth by means of the evaluation and control apparatus (21).

4. A position determination apparatus in accordance with any one of the preceding claims, **characterised in that** a check can be made by means of the evaluation and control device (21) whether the determined measured movement values are below or exceed a predetermined threshold value, with a distinction being made between the slow movement phase and the fast movement phase of the transport vehicle (13) on the basis of the result of this check.

5. A position determination apparatus in accordance with any one of the preceding claims, **characterised in that** the position output signals can be generated by means of the evaluation and control device (21)
- with reference to the measured position values, in particular with reference to averaged measured position values; or
- with reference to measured movement values, in particular with reference to singly or twice integrated measured movement values; or
- with reference to a combination of the measured position values and of. the measured movement values

6. A position determination apparatus in accordance with any one of the preceding claims, **characterised in that** the position output values can be determined by means of the evaluation and control device (21) with reference to a predetermined modelling of the movement of the driverless transport vehicle (13) which at least takes account of the determined measured position values, the determined measured movement values and the mass of the driverless transport vehicle.

7. A position determination apparatus in accordance with any one of the preceding claims, **characterised in that** the motion sensor (19) is made as an acceleration sensor, as a speed sensor or as a downwardly directed camera with an associated image processing device.

8. A position determination apparatus in accordance with any one of the preceding claims, **characterised in that** the motion sensor (19) is made as a multidimensional motion sensor by which at least one movement of the position determination apparatus taking place within a horizontal plane can be detected.

9. A position determination apparatus in accordance with any one of the preceding claims, **characterised in that** the motion sensor (19) is integrated into the position determination apparatus (11).

10. A position determination apparatus in accordance with any one of the preceding claims, **characterised in that** the position determination apparatus (11) is made as an optoelectronic distance measurement apparatus by which a distance (D) from a target (17) can be determined by the transmission and reception of light signals, with the measured position value corresponding to the determined distance (D).

11. A method for the generation of position output signals for a drive controller (25) of a driverless transport vehicle (13), wherein measured position values are determined which correspond to a then current position of the driverless transport vehicle (13), **characterised in that**
measured movement values which correspond to a movement of the driverless transport vehicle (13) are determined in addition to the determination of the measured position values,
wherein the position output signals are generated with reference to the measured position values and to the measured movement values,
wherein a distinction is made between at least a slow movement phase and a fast movement phase of the driverless transport vehicle (13) on the basis of the determined measured movement values, and wherein the measured position values are evaluated with a different integration depth in dependence on the movement phase found.

12. A method in accordance with claim 11, **characterised in that** the measured position values for the slow movement phase of the transport vehicle (13) are evaluated with a higher integration depth than for the fast movement phase, with an integration depth of zero also being able to be provided for the fast movement phase.

13. A method in accordance with one of the claims 11 or 12, **characterised in that** a respective communication on a different number of determined measured position values takes place for the evaluation of the measured position values with a different integration depth.

## Revendications

1. Dispositif de détermination de position (11) pour un véhicule de transport sans conducteur (13), au moyen duquel il est possible de déterminer des valeurs de mesure de position qui correspondent à une position actuelle du dispositif de détermination de position,
**caractérisé en ce que**
le dispositif de détermination de position comprend un capteur de déplacement (19) au moyen duquel, en supplément à la détermination des valeurs de mesure de position, il est possible de détecter un déplacement du dispositif de détermination de position et de déterminer des valeurs de mesure de déplacement correspondantes,
dans lequel le dispositif de détermination de position (11) comprend un dispositif d'évaluation et de commande (21) au moyen duquel les valeurs de mesure de position et les valeurs de mesure de déplacement peuvent être évaluées, pour fournir des signaux de sortie de position correspondants pour une commande d'entraînement (25) du véhicule de transport sans conducteur (13), et
dans lequel le dispositif d'évaluation et de commande (21) est réalisé pour l'évaluation des valeurs de mesure de position et des valeurs de mesure de déplacement de telle façon qu'en se basant sur les valeurs de mesure de déplacement déterminées, il fait une différence au moins entre une phase de déplacement lent et une face de déplacement rapide du véhicule de transport sans conducteur (13) qui porte le dispositif de détermination de position, et qu'il évalue les valeurs de mesure de position avec une profondeur d'intégration différente pour les différentes phases de déplacement.

2. Dispositif de détermination de position selon la revendication 1,
**caractérisé en ce que** le dispositif d'évaluation et de commande (21) est réalisé pour l'évaluation des valeurs de mesure de position et des valeurs de mesure de déplacement de telle façon qu'il évalue les valeurs de mesure de position pour la phase de déplacement lent du véhicule de transport (13) avec une profondeur d'intégration plus élevée que pour la phase de déplacement rapide, et dans lequel pour la phase de déplacement rapide il peut également être prévu une profondeur d'intégration nulle.

3. Dispositif de détermination de position selon l'une des revendications précédentes,
**caractérisé en ce que** pour l'évaluation des valeurs de mesure de position avec une profondeur d'intégration différente au moyen du dispositif d'évaluation et de commande (21), il peut être exécuté une moyenne respective sur un nombre différent de valeurs de mesure de position déterminées.

4. Dispositif de détermination de position selon l'une des revendications précédentes,
**caractérisé en ce que**, au moyen du dispositif d'évaluation et de commande (21), il est possible de vérifier si les valeurs de mesure de déplacement déterminées dépassent une valeur seuil prédéterminée ou restent au-dessous de celle-ci, et en se basant sur le résultat de cette vérification, il est fait une différence entre la phase de déplacement lent et la phase de déplacement rapide du véhicule de transport (30).

5. Dispositif de détermination de position selon l'une des revendications précédentes,
**caractérisé en ce que** les signaux de sortie de position peuvent être générés au moyen du dispositif d'évaluation et de commande (21)
- à l'aide des valeurs de mesure de position, en particulier à l'aide de valeurs de mesure de position moyennées, ou
- à l'aide des valeurs de mesure de déplacement, en particulier à l'aide de valeurs de mesure de déplacement après intégration simple ou double, ou
- à l'aide d'une combinaison des valeurs de mesure de position et des valeurs de mesure de déplacement.

6. Dispositif de détermination de position selon l'une des revendications précédentes,
**caractérisé en ce que** les signaux de sortie de position peuvent être déterminés au moyen du dispositif d'évaluation et de commande (21) à l'aide d'une modélisation prédéterminée du déplacement du véhicule de transport sans conducteur (13), laquelle tient compte au moins des valeurs de mesure de position déterminées, des valeurs de mesure de déplacement déterminées, et de la masse du véhicule de transport sans conducteur.

7. Dispositif de détermination de position selon l'une des revendications précédentes,
**caractérisé en ce que** le capteur de déplacement (19) est réalisé comme un capteur d'accélération, un capteur de vitesse ou une caméra dirigée vers le bas, avec un système de traitement d'images associé.

8. Dispositif de détermination de position selon l'une des revendications précédentes,
**caractérisé en ce que** le capteur de déplacement (19) est réalisé comme un capteur de déplacement à plusieurs dimensions, au moyen duquel il est possible de détecter au moins un déplacement du dispositif de détermination de position qui se produit dans un plan horizontal.

9. Dispositif de détermination de position selon l'une des revendications précédentes,
**caractérisé en ce que** le capteur de déplacement (19) est intégré dans le dispositif de détermination de position (11).

10. Dispositif de détermination de position selon l'une des revendications précédentes,
**caractérisé en ce que** le dispositif de détermination de position (11) est réalisé sous la forme d'un dispositif de mesure de distance optoélectronique, au moyen duquel il est possible de déterminer une distance (D) par rapport à une cible (17) par émission et réception de signaux lumineux, tel que la valeur de mesure de position correspond à la distance (D) déterminée.

11. Procédé pour engendrer des signaux de sortie de position pour une commande d'entraînement (25) d'un véhicule de transport sans conducteur (13), dans lequel on détermine des valeurs de mesure de position qui correspondent à une position actuelle du véhicule de transport sans conducteur (13),
**caractérisé en ce que**, en plus de la détermination des valeurs de mesure de position, on détermine des valeurs de mesure de déplacement qui correspondent à un déplacement du véhicule de transport sans conducteur (13),
dans lequel les signaux de sortie de position sont engendrés à l'aide des valeurs de mesure de position et des valeurs de mesure de déplacement,
dans lequel, en se basant sur les valeurs de mesure de déplacement déterminées, ont fait une différence au moins entre une phase de déplacement lent et une phase de déplacement rapide du véhicule de transport sans conducteur (13), et
dans lequel les valeurs de mesure de position sont évaluées avec une profondeur d'intégration différente selon la phase de déplacement constatée.

12. Procédé selon la revendication 11,
**caractérisé en ce que** les valeurs de mesure de position pour la phase de déplacement lent du véhicule de transport (13) sont évaluées avec une profondeur d'intégration plus élevée que pour la phase de déplacement lent, et dans lequel on peut également prévoir une profondeur d'intégration nulle pour la phase de déplacement rapide.

13. Procédé selon l'une des revendications 11 ou 12,
**caractérisé en ce que**, pour l'évaluation des valeurs de mesure de position avec une profondeur d'intégration différente, on procède à une moyenne respective sur un nombre différent de valeurs de mesure de position déterminées.
